Europäisches Patentamt

European Patent Office

Office européen des brevets

(11) Veröffentlichungsnummer: **0 259 691**
A2

## (12) EUROPÄISCHE PATENTANMELDUNG

(21) Anmeldenummer: 87112310.5

(22) Anmeldetag: 25.08.87

(51) Int. Cl.⁴: **B23H 3/00**

(30) Priorität: 08.09.86 DE 8624013 U

(43) Veröffentlichungstag der Anmeldung:
16.03.88 Patentblatt 88/11

(84) Benannte Vertragsstaaten:
DE FR GB IT

(71) Anmelder: AEG-Elotherm GmbH
Hammesberger Strasse 31
D-5630 Remscheid-Hasten(DE)

(72) Erfinder: Fey, Franz Josef
Reinshagenstrasse 117
D-5630 Remscheid(DE)
Erfinder: Wolter, Bernd
Henkelshof 2-4
D-5630 Remscheid 11(DE)

(74) Vertreter: Patentanwaltsbüro Cohausz &
Florack
Postfach 14 01 47
D-4000 Düsseldorf 1(DE)

(54) Elektrodenkopf zum elektrochemischen Senken.

(57) Die Erfindung betrifft einen Elektrodenkopf zum
elektrochemischen Senken, mit an ihm lösbar befestigten Elektrodenhalter, Elektrode und Werkstück-
Niederhalter. Kennzeichen der Erfindung ist, daß in
den Elektrodenhalter (1) ein elastisch verformbarer
Ring (5) koaxial eingeschrumpft ist, dessen radiale
Breite (b) so bemessen ist, daß der konzentrische
Spalt zwischen Elektrodenhalter (2) und Werkstück-
Niederhalter (4) bis auf den verbleibenden Arbeitsspalt (s) ausgefüllt ist.

Fig.: 1/1

EP 0 259 691 A2

## Elektrodenkopf zum elektrochemischen Senken

Die Neuerung betrifft einen Elektrodenkopf zum elektrochemischen Senken mit an ihm lösbar befestigten Elektrodenhalter, Elektrode und Werkstück-Niederhalter.

Der Neuerung liegt die Aufgabe zugrunde, einen Elektrodenkopf der eingangs genannten Gattung dahingehend zu verbessern, daß

a) die Vorschubgeschwindigkeit erhöht werden kann,

b) die Verschleißfestigkeit verbessert wird,

c) eine Selbstzentrierung stattfindet,

d) eine einfache Montage und Demontage der am Elektrodenkopf befestigten Teile ermöglicht wird und schließlich

e) eine gute Abdichtung des konzentrischen Spaltes zwischen Elektrodenhalter und Werkstück-Niederhalter bis auf den verbleibenden Arbeitsspalt, durch den der Elektrolyt als Arbeitsmedium strömt, erfolgt.

Zur Lösung dieser Aufgabe wird neuerungsgemäß ein Elektrodenkopf vorgeschlagen, bei dem in den Elektrodenhalter ein elastisch verformbarer Ring koaxial eingeschrumpft ist, dessen radiale Breite b so bemessen ist, daß der konzentrische Spalt zwischen dem elastischen Ring und dem Werkstück bis auf den verbleibenden Arbeitsspalt ausgefüllt ist. Bevorzugt wird Polyurethan als Material für den Ring eingesetzt. Gemäß einer weiteren vorteilhaften Ausgestaltung des neuerungsgemäßen Elektrodenkopfes ist die Elektrode eine flache Ringscheibe mit Profilierung an ihrem Innenrand.

Der Ring zwischen dem Elektrodenhalter und dem Werkstück-Niederhalter ist bei der neuerungsgemäßen Lösung leicht einzusetzen und auszuwechseln. Er wird jeweils zusammen mit der Elektrode, auf deren Abmessung er abgestimmt ist, an dem Elektrodenhalter befestigt. Wichtig ist bei der neuerungsgemäßen Ausgestaltung des Elektrodenkopfes, daß der elastisch verformbare Ring auch nach dem Einsetzen in den Elektrodenhalter an die Rundung des Werkstückes derart angepaßt ist, daß ein über den Umfang gleich breiter Arbeitsspalt gebildet ist. Auf diese Weise wird der Elektrolyt gezwungen, durch den engen Arbeitsspalt zu strömen. Bei bisherigen konstruktiven Lösungen war der Spalt zwischen dem nicht elastischen Ring und dem Werkstück so groß, daß eine große Menge Elektrolyt ungenutzt am Arbeitsspalt vorbeiströmte. Bei der jetzigen Lösung kann der Elektrolyt nur durch den Arbeitsspalt, und damit zwischen zu bearbeitendem Werkstück und Arbeitselektrode, strömen, wodurch er besser ausgenutzt wird. Dadurch wird auch die Bearbeitung intensiver, und die Vorschubgeschwindigkeit kann erhöht werden.

Als Material für den Ring kommt insbesondere Polyurethan in Betracht, das die erforderliche Temperaturbeständigkeit bei der Arbeitstemperatur des Elektrolyten von 50 °C und eine ausreichende Verschleißfestigkeit aufweist, um mehrfach montiert und demontiert werden zu können.

Die neuerungsgemäße Ausführung ermöglicht auch ein Selbstzentrieren des elastischen Ringes und überbrückt gleichzeitig Werkstücktoleranzen. Wegen der hohen Verschleißfestigkeit des verwendeten Materials kommt es zu keinem wesentlichen Abrieb an der Innenfläche des elastisch verformbaren Rings kommt. Dadurch wird die Einsatzdauer des Rings wesentlich erhöht.

Die Ausführung ist konstruktiv außerordentlich einfach, denn der Ring hat eine einfache geometrische Form und bedarf keiner besonderen Befestigungsmittel, weil er in den Elektrodenhalter eingeschrumpft wird. Dies geschieht in einfacher Weise von Hand. Durch dieses Einschrumpfen des Rings in den Elektrodenhalter ergibt sich auch eine gute Abdichtung, so daß der Elektrolyt keine Spalte findet, durch die er ungenutzt im Bypass am Arbeitsspalt vorbeiströmen kann.

In der Zeichnung ist ein Ausführungsbeispiel des neuerungsgemäßen Elektrodenkopfes dargestellt. Es zeigen:

Fig. 1 einen Längsschnitt der Gesamtanordnung,

Fig. 2 eine Draufsicht der Elektrode und

Fig. 3 einen Querschnitt der Elektrode.

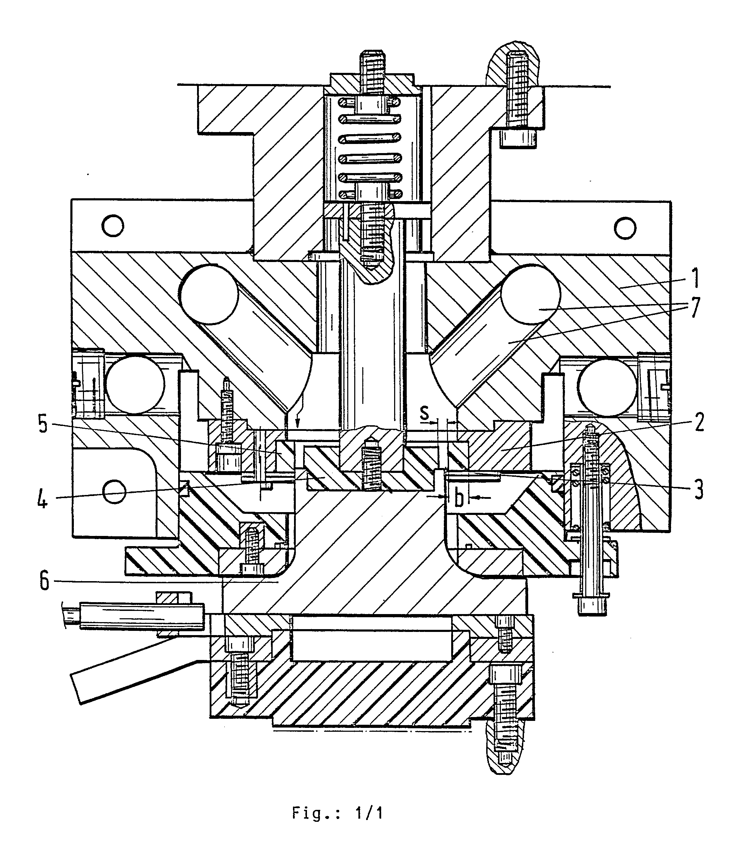

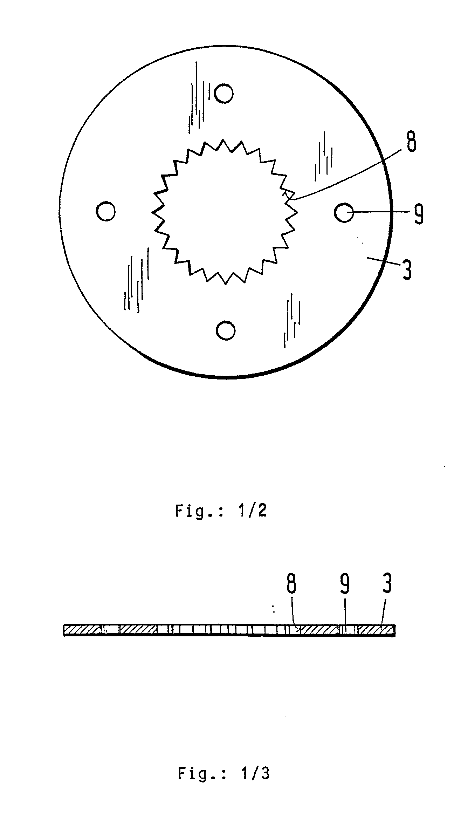

Gemäß Fig. 1 ist am Elektrodenkopf 1 der Elektrodenhalter 2 und an ihm die Elektrode 3 jeweils lösbar befestigt. In dem Elektrodenkopf 1 ist der Werkstück-Niederhalter 4 axial nachstellbar geführt, um das Werkstück 6 festzuhalten.

Der Elektrodenhalter 2 umgibt den Niederhalter 4 konzentrisch, wobei zwischen beiden ein Umfangsspalt verbleibt. Diesen Umfangsspalt füllt zum Teil der elastisch verformbare Ring 5 aus, der in den Elektrodenhalter 2 eingeschrumpft ist. Die radiale Breite b des Rings 5 ist dabei so bemessen, daß zwischen dem Außenumfang des Niederhalters 4 und dem Innenumfang des Rings 5 der eigentliche Arbeitsspalt s frei bleibt. Durch diesen Arbeitsspalt strömt aus den Leitungen 7 der Elektrolyt nach unten und gelangt an die eigentliche Bearbeitsstelle, wo die Elektrode 3 dem Werkstück 6 gegenübersteht. Durch elektrolytische Abtragung (Senken) wird die Form der Elektrode 3 auf das Werkstück 6 übertragen, z.B. wird in den Außenumfang des Werkstücks 6 eine Rillung, Riffelung, Verzahnung od.dgl. elektrolytisch eingraviert. Der Innendurchmesser des Rings 5 ist so bemessen, daß er die Oberkante des Werkstücks 6 umgreift und dadurch den Elektrolyten nur durch den Arbeitsspalt zwischen der Elektrode 3 und dem Werkstück 6 zwingt.

Die Elektrode 3 ist gemäß Fig. 2 und 3 eine dünne Ringscheibe mit Verzahnung am Innenrand 8 und Löchern 9 für den Durchtritt von Befestigungsschrauben, mittels derer die Elektrode 3 am Elektrodenhalter befestigt wird.

**Ansprüche**

1. Elektrodenkopf zum elektrochemischen Senken, mit an ihm lösbar befestigten Elektrodenhalter, Elektrode und Werkstück-Niederhalter, **dadurch gekennzeichnet,** daß in den Elektrodenhalter (1) ein elastisch verformbarer Ring (5) koaxial eingeschrumpft ist, dessen radiale Breite (b) so bemessen ist, daß der konzentrische Spalt zwischen Elektrodenhalter (2) und Werkstück-Niederhalter (4) bis auf den verbleibenden Arbeitsspalt (s) ausgefüllt ist.

2. Elektrodenkopf nach Anspruch 1, **dadurch gekennzeichnet,** daß der Ring (5) aus Polyurethan besteht.

3. Elektrodenkopf nach Anspruch 1 oder 2, **dadurch gekennzeichnet,** daß die Elektrode (3) eine flache Ringscheibe mit Profilierung an ihrem Innenrand (8) ist (Fig. 2).

Fig.: 1/1

Fig.: 1/2

Fig.: 1/3